**Europäisches Patentamt**

(19) **European Patent Office**

**Office européen des brevets**

(11) Veröffentlichungsnummer: **0 292 467**
A2

(12) **EUROPÄISCHE PATENTANMELDUNG**

(21) Anmeldenummer: 88890077.6

(22) Anmeldetag: 25.03.88

(51) Int. Cl.⁴: **B 23 Q 16/08**
B 23 Q 3/12, B 23 Q 1/00

(30) Priorität: 25.03.87 DE 8704411

(43) Veröffentlichungstag der Anmeldung:
23.11.88 Patentblatt 88/47

(84) Benannte Vertragsstaaten:
AT CH DE GB IT LI

(71) Anmelder: **MASCHINENFABRIK HEID
AKTIENGESELLSCHAFT**
**Ernstbrunner Strasse 31-33**
**A-2000 Stockerau (AT)**

(72) Erfinder: **Nader, Hans**
**Leopold Scheidlgasse 13**
**A-2000 Stockerau (AT)**

**Steiner, Karl**
**Neulerchenfelderstrasse 11/9**
**A-1160 Wien (AT)**

(74) Vertreter: **Müllner, Erwin, Dr. et al**
**Patentanwälte Dr. Erwin Müllner Dipl.-Ing. Werner
Katschinka Postfach 159 Weihburggasse 9**
**A-1010 Wien (AT)**

Die Bezeichnung der Erfindung wurde geändert (Richtlinien für die Prüfung im EPA, A-III, 7.3).

(54) **Spannkopf für das lösbare Befestigen eines Werkstückträgers auf einer Spindel einer Werkzeugmaschine.**

(57) Ein Spannkopf (2) auf der Hauptspindel (1) einer Werkzeugmaschine trägt auswechselbare Paletten (3), Palettenspannfutter, Palettenspannsysteme oder auch wahlweise verschiedene einstellbare Futter mit Backen. Die Paletten (30) oder Futter werden auf dem Spannkopf (2) durch Klemmen, wie etwa am Umfang verteilt Spannzangen (4),gehalten und ein Hirt-Zahnkranz (7) auf der Palettenunterseite (3) wird in einem Hirt-Zahnkranz (7) des Spannkopfes (4) zur Übertragung des Antriebs-Drehmoments gedrückt. Federpakete (5) halten die Klemmen geschlossen. In der Wechselposition drücken Stößel (8), die aus dem Spindelstock ausfahren, die Federpakete (5) im Spannkopf (3) zusammen, sodaß die Klemmkraft aufgehoben ist. Ein einfacher mechanischer Stellungsmelder (9) für die Offen- und Schließstellung der Klemmen in Form eines mit den Klemmen fest verbundenen Signalstiftes (9) im Spannkopf (2) und von Endschaltern (10) im Spindelstock kann vorgesehen sein. Ein geschlossener Kraftfluß wird innerhalb des Spannsystems infolge von Nasen (11) auf dem Spannkopf (2) und Hinterschneidungen (12) der Maschine beim Wechselvorgang zur Entlastung der Hauptspindel erreicht.

## Beschreibung

### "Spannkopf für das lösbare Befestigen eines Werkstückträgers, wie etwa einer Palette, eines Futters od.dgl., auf einer Spindel einer Werkzeugmaschine"

Die Erfindung betrifft einen Spannkopf für das lösbare Befestigen eines Werkstückträgers, wie etwa einer Palette, eines Futters od.dgl. auf einer Spindel einer Werkzeugmaschine, wobei unter Federkraft stehende Klemmen auf dem Spannkopf angeordnet, sind die kraft- und bzw. oder formschlüssig an dem Werkstückträger angreifen, und der Spannkopf wie auch der Werkstückträger eine gegeneinander gerichtete Planverzahnung, beispielsweise Hirt-Zahnkränze, aufweisen.

Bei Werkzeugmaschinen wird ein Werkstück auf ein Spannfutter zwischen radial verstellbaren Bakken eingespannt und dann einer spanabhenbenden Bearbeitung unterworfen. Ein rasches Wechseln der Werkstücke ist wesentlich. Viel Zeit wird durch Umspannen auf der Maschine verloren.

Aus der DE-OS 35 28 443 ist eine Kupplung für die lösbare Befestigung eines Werkstückträgers auf einer mit einer Werkzeugmaschine fest verbindbaren Aufnahme bekannt. Die Kupplung umfaßt eine Mehrzahl von Klemmen, die auf der Aufnahme für den Werkstückträger um die Achse herum auf einem Kreis angeordnet sind und die in radialer Richtung hakenförmig bewegbar sind. Die Klemmen greifen in der Kupplungsstellung in eine Ringnut des Werkzeugträgers und verriegeln den mittels einer Planverzahnung drehfest auf der Aufnahme aufliegenden Werkzeugträger gegenüber der Aufnahme. Die Betätigung der Klemmen erfolgt über ein komplexes System von Schubstangen und Kipphebeln durch das Innere der die Aufnahme tragenden Hauptspindel. Dadurch steht der Durchgang in der Hauptspindel für andere Zwecke nicht mehr zur Verfügung.

Die Erfindung zielt darauf ab, einen Spannkopf der eingangs beschriebenen Art einfach und funktionssicher aufzubauen, ohne den freien Durchgang in der hohlen Hauptspindel zu blockieren. Dies wird dadurch erreicht, daß maschinenseitig, insbesondere im Spindelstock, dem Spannkopf gegenüberliegende und gegen den Spannkopf ausfahrbare Schieber, vorzugsweise Stößel, vorgesehen sind, die in der ausgefahrenen Position an verschiebbaren Teilen des Spannkopfes zur äußeren Einleitung von Kräften angreifen, die den Klemmkräften der Klemmen entgegen gerichtet sind. Aus dem Spindelstock treten die hydraulisch oder pneumatisch betätigbaren Stößel aus, die die Federpakete im Spannkopf zusammendrücken und damit die Klemmen öffnen. Es kann dann ein auf dem Spannkopf aufsitzender Werkstückträger, wie etwa eine Palette,abgenommen werden. Werkstückträger und Spannkopf tragen jeweils eine Hirt-Verzahnung zur Übertragung des Drehmomentes. Eine besondere Ausführungsform ist dadurch gekennzeichnet, daß als Klemmen klauenartige Spannzangen längs eines Kreises um die Spindelachse herum, vorgesehen sind und der Werkstückträger den Spannzangen in der Klemmstellung gegenüberliegende Haltebolzen aufweist und daß jede Spannzange durch die Federkraft eines Federpaketes gegen die Klemmstellung vorgespannt ist. Die Spannzangen bewirken den axialen Andruck zwischen Werkzeugträger und Spannkopf.

Auf dem Werkstückträger können ein oder mehrere Werkstücke aufgespannt sein. Das Wechseln der Werkstückträger erfolgt rasch. Während der Bearbeitung der Werkstücke einer Palette, kann die vorhergehende entladen und eine nächste bestückt werden. An Stelle von Paletten können auch Spannfutter mit unterschiedlichen Ausführungen verwendet werden.

Die Werkzeugmaschine wird dadurch zu einem Bearbeitungszentrum mit hohem Wirkungsgrad.

Der besondere Vorteil der Erfindung liegt darin, daß der auf der Hauptspindel befestigte Spannkopf lediglich passive Elemente, nämlich Federpakete aufweist und eine Energieversorgung etwa durch die Hauptspindel hindurch nicht erforderlich ist. Damit bleibt der freie Durchgang der Hauptspindel zur Gänze erhalten.

Schließlich ist eine Wegekontrolle des Spann- und Lösevorganges mit einfachen Mitteln möglich. Es ist mit dem Spannzangenschaft ein Signalstift verbunden, dessen ein- oder ausgefahrene Lage abgetastet wird und ein Kriterium für die Funktionsstellung der Spannzange abgibt.

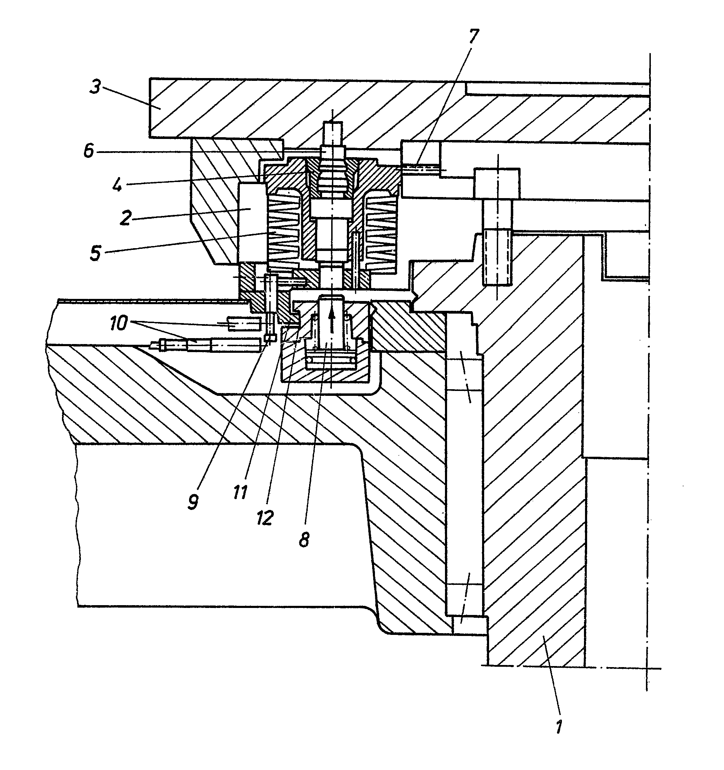

Randseitig ist auf dem Spannkopf eine hakenförmige Leiste vorgesehen, die einen stillstehenden Vorsprung des Spindelstockes hintergreift. Werden die Stößel aktiviert, dann be wirkt diese Konstruktion einen geschlossenen Kraftfluß innerhalb des Spannsystems ohne Belastung der Hauptspindel. Als Klemmen können auch radial bewegliche, über die Stößel steuerbare Klauen vorgesehen sein, die in Hinterschneidungen des Werkstückträgers eingreifen. Ein Ausführungsbeispiel ist im Schnitt dargestellt. Die Figur zeigt die Hauptspindel einer Werkzeugmaschine mit einem Spannkopf und mit aufgesetzter Palette im Schnitt.

Auf der Hauptspindel 1 einer Werkzeugmaschine ist ein Spannkopf 2 angeordnet, auf dem nicht unmittelbar Werkstücke aufspannbar sind, wie dies bei einem Futter der Fall ist, sondern der einen Werkstückträger, wie etwa eine Palette 3 trägt auf der das oder die Werkstücke exakt positioniert sind.

Zur lösbaren Befestigung der Werkstückträger 3 auf dem Spannkopf 2 sind im Spannkopf 2 Spannzangen 4 angeordnet, die sich unter der Kraft der Federpakete 5 an Haltebolzen 6 der Palette 3 legen. Infolge der konischen Ausbildung der Haltebolzen ergibt sich eine Kraftwirkung auf die Palette 3 in Richtung auf den Spannkopf 2.

Stirnseitig trägt sowohl der Spannkopf 2 als auch die Palette 3 je einen Hirt-Zahnkranz 7. Über die Hirt-Verzahnung wird das Drehmoment übertragen.

Das Federpaket 5 hält die Spannzange 4 in der Schließstellung. Die Spannzangen werden wie folgt geöffnet:

Mit den Spannzangenachsen sind um das Lager der Hauptspindel 1 herum aus dem Spindelstock hydraulisch (pneumatisch) ausfahrbare Stößel 8 vorgesehen. Die Hauptspindel wird zum Wechseln der Palette 3 in jener Drehlage festgestellt, in der Stößelachsen 8 und Spannzangenachsen 4 fluchten. Durch Ausfahren der Stößel 8 werden die Federpakete 5 zusammengedrückt und damit die Haltebolzen 6 der Palette 3 freigegeben. Die Palette 3 (mit bereits bearbeiteten Werkstücken) kann gegen eine andere (mit noch unbearbeiteten Werkstücken)ausgetauscht werden. Der Austausch reduziert sich auf ein bloßes Umstecken der einen Palette gegen eine andere.

Ist der Austausch erfolgt, dann werden die Stößel 8 zurückgezogen, sodaß die Federpakete 5 voll zur Wirkung kommen und die neue Palette sicher festhalten und in die Hirt-Ver zahnung 7 drücken.

Auf diese Weise wird durch ein Aufspannen von Werkstücken keine Maschinenzeit beansprucht. Das Wechseln der Paletten kann in wesentlich kürzerer Zeit erfolgen, als das Spannen von Werkstücken. Darüber hinaus bietet das System noch den Vorteil, daß auf den Spannkopf Palettenfutter mit Backen oder gewöhnlichen Backenfutter, wie bei einer Serienmaschine, in raschem Wechsel aufgesetzt werden können.

Die Stellung der Spannzange 4 wird am Spannkopf durch einen Stift 9 angezeigt, dessen Lage durch Endschalter 10 feststellbar ist. Schließlich wird noch auf eine mit dem Spannkopf 2 mitrotierende Nase 11 hingewiesen, die in eine Hinterschneidung 12 maschinenseitig eingreift. Beim Wechselvorgang wird der Spannkopf 4 in axialer Richtung durch die ineinandergreifenden Nasen und Hinterschneidungen unterstützt und eine Kraftwirkung auf die Hauptspindel durch die ausfahrenden Stößel 8 dadurch vermieden. Es ist ein geschlossener Kraftschluß innerhalb des Spannsystems vorhanden.

Der Spannkopf 4 arbeitet passiv, das heißt, es ist keine Energiezufuhr (z.B. Druckleitungen) durch die hohen Hauptspindel hindurch erforderlich. Der freie Durchgang in der Hauptspindel 1 steht für andere Zwecke zur Gänze zur Verfügung. Die Vollzugsmeldung der Befehle beim Wechselvorgang wird direkt vom Stift 9 in einfacher und wirkungsvoller Weise übermittelt.

**Patentansprüche**

1. Spannkopf für das lösbare Befestigen eines Werkstückträgers, wie etwa einer Palette, eines Futters od. dgl. auf einer Spindel einer Werkzeugmaschine, wobei unter Federkraft stehende Klemmen auf dem Spannkopf angeordnet sind, die kraft- und bzw. oder formschlüssig an dem Werkstückträger angreifen,und der Spannkopf wie auch der Werkstückträger eine gegeneinander gerichtete Planverzahnung, beispielsweise Hirt-Zahnkräze, aufweisen, dadurch gekennzeichnet, daß maschinenseitig, insbesondere im Spindelstock, dem Spannkopf (2) gegenüberliegende und gegen den Spannkopf (2) ausfahrbare Schieber, vorzugsweise Stößel (8), vorgesehen sind, die in der ausgefahrenen Postion an verschiebbaren Teilen des Spannkopfes (2) zur äußeren Einleitung von Kräften angreifen, die den Klemmkräften der Klemmen entgegengerichtet sind.

2. Spannkopf nach Anspruch 1, dadurch gekennzeichnet, daß als Klemmen klauenartige Spannzangen (4) längs eines Kreises um die Spindelachse herum vorgesehen sind und der Werkstückträger (3) den Spannzangen (4) in der Klemmstellung gegenüberliegende Haltebolzen (6) aufweist und daß jede Spannzange (4) durch die Federkraft eines Federpaketes gegen die Klemmstellung vorgespannt ist.

3. Spannkopf nach Anspruch 2, dadurch gekennzeichnet, daß die Achsen der Spannzangen (4) in der Wechselposition des Werkstückträgers (3) mit den Achsen der Stößel (8) fluchten.

4. Spannkopf nach Anspruch 2, dadurch gekennzeichnet, daß die Haltebolzen (6) eine gegen den Spannkopf (20) zu divergierende Kegelfläche aufweisen.

5. Spannkopf nach einem der Ansprüche 1 bis 4, dadurch gekennzeichnet, daß der Spannkopf (2) mindestens eine Nase (11) trägt, die in eine maschinenseitige Hinterschneidung (12), insbesondere eine auf dem Spindelstock vorgesehene Ringnut zur Entlastung der Spindel von Kräfteeinwirkungen, etwa von Biegemomenten beim Wechselvorgang, eingreift.

6. Spannkopf nach einem der Ansprüche 1 bis 5, dadurch gekennzeichnet, daß die Klemmen, insbesondere Spannzangen (4), mit einem gegen das Maschinengehäuse, insbesondere den Spindelstock vorspringenden, verschiebbaren Stift (9) verbunden ist, dessen die Spannzangenstellung wiedergebende Stellung maschinenseitig von mindestens einem Schalter, wie etwa einem Endschalter (10), abtastbar ist.